# EUROPÄISCHE PATENTANMELDUNG

(11) **EP 3 711 866 A1**
(43) Veröffentlichungstag der Anmeldung: **23.09.2020**
(21) Anmeldenummer: 19171447.6
(22) Anmeldetag: 26.04.2019
(51) Int. Cl.: B05B 14/00

(54) **FILTERVORRICHTUNG ZUM ABSCHEIDEN VON OVERSPRAY, BESCHICHTUNGSANLAGE UND VERFAHREN ZUM WECHSELN EINES FILTERMODULS**

(30) Priorität: 28.05.2018 DE 102018112738
(71) Anmelder: Eisenmann SE, 71032 Böblingen (DE)
(72) Erfinder: Schulze, Herbert, 71134 Aidlingen (DE)
(74) Vertreter: Ostertag & Partner Patentanwälte mbB

(57) **Zusammenfassung**

Die Erfindung betrifft eine Filtervorrichtung zum Abscheiden von Overspray aus mit Overspray beladener Kabinenluft einer Beschichtungsanlage, mit einem Filtermodul mit zumindest einer austauschbaren Einweg-Filtereinheit, wobei durch das Filtermodul mit Overspray beladene Kabinenluft leitbar ist und in welchem Overspray abscheidbar ist, wobei das Filtermodul mit einem Zuluftanschluss und einem Abluftanschluss koppelbar ist und eine Koppelstellemit der Filtervorrichtung aufweist.

Die Erfindung betrifft außerdem eine Beschichtungsanlage mit einer solchen Filtervorrichtung sowie ein Verfahren zum Wechseln eines Filtermoduls einer Filtervorrichtung.

## Beschreibung

### HINTERGRUND DER ERFINDUNG

### 1. Gebiet der Erfindung

Die Erfindung betrifft eine Filtervorrichtung zum Abscheiden von Overspray aus mit Overspray beladener Kabinenluft von Beschichtungsanlagen, mit einem Filtermodul mit zumindest einer austauschbaren Einweg-Filtereinheit, wobei durch das Filtermodul mit Overspray beladene Kabinenluft leitbar ist und in welchem Overspray abscheidbar ist, wobei das Filtermodul mit einem Zuluftanschluss und einem Abluftanschluss koppelbar ist.

Die Erfindung betrifft außerdem eine Beschichtungsanlage zum Lackieren von Fahrzeugbauteilen oder/ und Fahrzeugkarosserien mit einer solchen Filtervorrichtung sowie ein Verfahren zum Wechseln eines Filtermoduls einer solchen Filtervorrichtung.

### 2. Beschreibung des Standes der Technik

Die nachstehende Erfindung wird am Beispiel von Fahrzeugkarosserien als zu beschichtende Gegenstände beschrieben, wobei unter "Fahrzeugkarosserie" nicht nur eine komplette Fahrzeugkarosserie verstanden werden soll, sondern auch Teile einer solchen Karosserie, die für eine Beschichtung in einer solchen Vorrichtung geeignet sind, wie beispielsweise Fahrzeugtüren, Räder oder Stoßfänger.

Bei der manuellen oder automatischen Applikation von Beschichtungen beispielsweise in einer Lackierkabine gelangt ein Teilstrom der Beschichtung, der im Allgemeinen sowohl Festkörper oder/und Bindemittel als auch Lösemittel enthält, nicht auf den zu beschichtenden Gegenstand. Dieser Teilstrom wird als "Overspray" bezeichnet. Dementsprechend bezeichnet Overspray ein disperses System wie beispielsweise eine Emulsion, eine Suspension oder eine Kombination daraus. Der Overspray wird mit dem Luftstrom der Kabine einer Abscheidung zugeführt, so dass die durch die Abscheidung gereinigte Luft - gegebenenfalls nach einer Konditionierung - wieder der Lackierkabine zugeleitet werden kann. Bei Anlagen mit größerem Lackverbrauch, beispielsweise für die Lackierung von Fahrzeugkarosserien, haben sich neben den bereits bekannten Nassabscheidesysteme und den elektrostatisch arbeitenden Trockenabscheidesystemen Filtervorrichtungen etabliert, die mit austauschbaren Filtereinheiten arbeiten. Die Filtereinheiten können nach Erreichen einer Grenzbeladung mit Overspray gegen unbeladene Filtereinheiten ausgetauscht werden. Die beladenen Filtereinheiten können beispielsweise thermisch entsorgt oder gegebenenfalls recycelt werden. Aufbereitung oder/und Entsorgung derartiger Filtereinheiten oder - module kann energetisch und ressourcenbezogen verträglicher sein als ein vergleichbarer Aufwand bei einem Nassabscheidesystem oder einer elektrostatisch arbeitenden Abscheidevorrichtung.

Für den Abscheidevorgang wird einem Filtermodul, das in der Regel mehrere Filtereinheiten umfasst, mit Overspray beladene Kabinenluft zugeführt. Die Kabinenluft durchströmt das Innere des Filtermoduls respektive die Filtereinheiten und verlässt diese weitgehend von Overspray befreit. Die Zuführung der Kabinenluft geschieht über einen Zuluftanschluss, die Abfuhr der gereinigten Abluft über einen Abluftanschluss. Nach einer vollständigen oder teilweisen Beladung einer, mehrerer oder aller Filtereinheiten sind diese gegen unbeladene Filtereinheiten zu tauschen.

### ZUSAMMENFASSUNG DER ERFINDUNG

Bei dieser Art von System ist eine Reihe von Nachteilen erkannt worden. Beispielsweise ist der Wechselvorgang einzelner oder aller Filtereinheiten oftmals mühsam, da Filtereinheiten zusammenkleben können und ein Entfernen aus dem Filtermodul erschwert ist. Aufgrund der Kompaktheit der Filtermodule ergeben sich besondere Anforderungen an den Brandschutz.

Es ist eine Aufgabe der Erfindung, eine Filtervorrichtung zum Abscheiden von Overspray aus mit Overspray beladener Kabinenluft von Beschichtungsanlagen anzugeben, welche die Handhabung und den Gebrauch einer Filtervorrichtung erleichtert, die genannten Nachteile vermeidet und/oder insbesondere den Wechsel einer Filtereinheit erleichtert. Diese Aufgabe wird durch eine Filtervorrichtung gemäß dem unabhängigen Anspruch 1 gelöst. Die erfindungsgemäße Filtervorrichtung zum Abscheiden von Overspray aus mit Overspray beladener Kabinenluft von Beschichtungsanlagen weist ein Filtermodul mit zumindest einer austauschbaren Einweg-Filtereinheit auf, wobei durch das Filtermodul mit Overspray beladene Kabinenluft leitbar ist und in welchem Overspray abscheidbar ist, wobei das Filtermodul mit einem Zuluftanschluss und einem Abluftanschluss koppelbar ist und eine Koppelstelle mit der Filtervorrichtung aufweist.

Unter dem Begriff Koppelstelle soll vorliegend beispielsweise eine mechanische oder/und elektrische Verbindung zwischen dem Filtermodul und der Filtervorrichtung umfasst sein. Bei einer mechanischen Verbindung kann es sich beispielsweise um eine Drehhebel- oder eine Kniehebelverbindung handeln. Eine solche mechanische Verbindung kann so ausgestaltet sein, dass eine ordnungsgemäße Kopplung zwischen Filtermodul und Filtervorrichtung beispielsweise für Bedienpersonal bereits an der Stellung beispielsweise eines oder mehrerer Drehhebel- oder Kniehebelverbindungen mit bloßem Auge erkennbar ist. Befinden sich beispielsweise alle Hebel der Hebelverbindung in einer Arbeitsposition, in der das Filtermodul wirksam mit der Filtervorrichtung gekoppelt ist, so ist dies auf einfache Weise für eine Bedienperson zu erkennen. Umgekehrt ist das Fehlen einer wirksamen Verbindung leicht daran zu erkennen, dass sich nicht alle Hebel in der richtigen (Arbeits-) Stellung befinden.

Bei einer elektrischen Verbindung kann es sich beispielsweise um einen bloßen elektrischen Kontaktgeber oder um eine Steckverbindung handeln.

Über das Vorsehen einer Koppelstelle kann das Filtermodul mit der zumindest einen austauschbaren Einweg-Filtereinheit auf einfache Art und Weise von der Filtervorrichtung getrennt und mit dieser verbunden werden. Zumindest der Austausch einer beladenen Filtereinheit gegen eine unbeladene Filtereinheit ist auf einfache Art und Weise realisierbar.

Bei einer vorteilhaften Ausführungsform der Erfindung ist die Koppelstelle dazu ausgelegt, Energie oder/und ein Signal zu übertragen oder/und zu erzeugen. Das Übertragen von Energie über die Koppelstelle bietet die Möglichkeit, das Filtermodul mit Energie im angekoppelten Zustand zu versorgen und beispielsweise elektrische Verbraucher in dem Filtermodul zu betreiben. Das Übertragen eines oder mehrerer Signale über die Koppelstelle eröffnet die Möglichkeit, einerseits einen Zustand des Filtermoduls beispielsweise hinsichtlich der Beladung abzufragen und so der Filtervorrichtung Informationen über das Filtermodul oder/und über die darin enthaltenen Filtereinheiten zu geben. Andererseits kann mittels einer Signalübertragung von der Filtervorrichtung auf das Filtermodul dieses gesteuert werden und Signalgeber, Aktoren, Ventilatoren etc. aktiviert/deaktiviert werden. Die Koppelstelle kann auch dazu ausgelegt sein, Signale zu erzeugen. Beispielsweise kann die Koppelstelle ein Signale erzeugen und an die Filtervorrichtung übertragen, wenn ein Filtermodul an die Koppelstelle gekoppelt oder nicht gekoppelt ist.

Bei einer bevorzugten Ausführungsform spiegelt das Signal einen eingekoppelten oder/und einen ausgekoppelten Zustand des Filtermoduls oder/und einen Beladungszustand des Filtermoduls oder einzelner Filtermodule wieder. Es kann somit beispielsweise an der Filtervorrichtung detektiert werden, ob das Filtermodul sicher mit der Filtervorrichtung gekoppelt ist. Alternativ oder zusätzlich kann der Beladungszustand des Filtermoduls von dem Filtermodul zu der Filtervorrichtung kommuniziert werden. Das so erzeugte Signal kann an die Filtervorrichtung kommuniziert und dort weiterverarbeitet (und beispielsweise angezeigt) werden oder direkt an dem Filtermodul angezeigt werden. In dem letzteren Fall kann so eine Bedienperson das Signal wahrnehmen und beispielsweise das Filtermodul einer Wartung - beispielsweise einem Filtereinheitenaustausch - zuführen.

Bei einer weiteren Ausgestaltung der Filtervorrichtung weist die Filtervorrichtung eine Signaleinrichtung auf, welche dazu eingerichtet ist, ein optisches, akustisches oder/ein elektrisches Signal auszugeben. Insbesondere kann die Signaleinrichtung an dem Filtermodul angeordnet sein. Somit kann eine Bedienperson im Falle eines optischen oder akustischen Signals, das beispielsweise in der Umgebung des Filtermoduls oder auch in einer zentralen Leitwarte ausgegeben werden kann, das Signal erkennen und entsprechend handeln. Ein elektrisches Signal kann beispielsweise dazu geeignet sein, das Filtermodul für ein Entkoppein vorzubereiten oder/und das Entkoppeln auszulösen. Alternativ oder zusätzlich kann ein elektrisches Signal auch dazu dienen, in ein optisches oder akustisches Signal umgewandelt zu werden.

Konkret kann das Signal beispielsweise als Schaltzustand einer Leuchtanzeige an der Filtervorrichtung oder dem Filtermodul, als Intensität einer Leuchtanzeige, als Farbanzeige, als Textanzeige, als Symbolanzeige, als Stellung eines Betätigungsorgans oder/und als Veränderung eines der genannten Signale ausgebildet sein. Die genannten Signale oder/und die Veränderungen der genannten Signale sind insbesondere dazu geeignet, direkt an dem Filtermodul, in einer Umgebung des Filtermoduls oder/und an einer zentralen Stelle durch die Beschichtungsanlage, die Filtervorrichtung oder/und durch eine Bedienperson wahrgenommen zu werden, beispielsweise um eine Bedienperson über den Zustand eines Filtermoduls zu informieren oder vor möglichen gefährlichen Zuständen zu warnen. Beispielsweise kann es sich bei der Stellung des Betätigungsorgans um eine Stellung eines oder mehrerer Hebel handeln, die für ein wirksames Koppeln des Filtermoduls mit der Filtervorrichtung in eine bestimmte Stellung zu bringen sind. Dies kann beispielsweise als rein passives optisches Signal für die Anzeige einer wirksamen Kopplung zwischen dem Filtermodul und der Filtervorrichtung dienen.

In vorteilhafter Weise kann bei einer Ausführungsform im Bereich des Zuluftanschlusses oder/und des Abluftanschlusses ein Gebläse angeordnet sein. Dies kann den Wirkungsgrad eines Filtermoduls im gekoppelten Zustand erhöhen oder/und über einen Zeitraum konstant halten.

Das Gebläse kann an/in dem Filtermodul angeordnet sein. Beispielsweise kann das Filtermodul im Bereich des Strömungsweges zwischen dem Zuluftanschluss und dem Abluftanschluss angeordnet sein. Durch eine Regelung des Gebläses kann beispielsweise der Volumenstrom an dem Zuluftanschluss und/oder dem Abluftanschluss weitgehend konstant gehalten werden. Sind in der Filtervorrichtung mehrere Filtermodule vorhanden, können unterschiedliche Volumenströme für unterschiedliche Filtermodule eingestellt werden. Eine solche Einstellung kann beispielsweise mit der räumlichen Anordnung der Filtermodule innerhalb der Filtervorrichtung korrelieren. Sind beispielsweise aufgrund der räumlichen Anordnung manche Filtermodule mit Kabinenluft beaufschlagt, die anteilig weniger Overspray-Beladung aufweist, können diese Filtermodule entsprechend mit einem geringeren Volumenstrom beaufschlagt werden. Alternativ oder zusätzlich lassen sich durch eine geeignete Ansteuerung der Gebläse Strömungen erzeugen, die den mit Overspray beladenen Gasstrom von einem Filtermodul zu einem benachbarten Filtermodul zumindest teilweise umleiten. Dies kann beispielsweise vor und während einem Filtermodulwechsel sinnvoll sein.

Die Anordnung des Gebläses an/in dem Filtermodul erleichtert Wartung, Reinigung oder/und die Reparatur des Filtermoduls. In diesem Zusammenhang kann es von Vorteil sein, wenn das Filtermodul über die Koppelstelle Energie oder/und elektrische Signale zur Filtervorrichtung übertragen bzw. von dieser empfangen kann. Beispielsweise kann über den Leistungsverbrauch eines dem Filtermodul zugeordneten Gebläses oder über ein Druckgefälle innerhalb des Filtermoduls Rückschlüsse auf den Beladungszustand des Filtermoduls gezogen werden.

Gemäß einer Ausgestaltung ist das Filtermodul als von einer Bedienperson auf dem Boden verfahrbar ausgebildet. Die Verfahrbarkeit kann beispielsweise Rollen unterhalb des Filtermoduls, Griffe, ein stabiles Gehäuse oder Ähnliches umfassen.

Bei einer Ausführungsform weist die austauschbare Einweg-Filtereinheit ein Außengehäuse mit einer Anströmseite und eine Abströmseite auf und die Filtervorrichtung weist Trennmittel zur Verhinderung eines Verklebens der Einweg-Filtereinheit mit einer zweiten Einweg-Filtereinheit oder dem Filtermodul auf. Im Rahmen des Filtervorgangs strömt die mit Overspray beladene Kabinenluft gegen das Außengehäuse der Einweg-Filtereinheit, insbesondere dessen Anströmseite. Nachdem herkömmlicherweise Einweg-Filtereinheiten innerhalb des Filtermoduls lediglich eingeschoben werden, kann ein Abscheiden des Oversprays ausschließlich innerhalb des Außengehäuses der Einweg-Filtereinheit nicht sichergestellt werden. Beispielsweise können unerwünschte Fehlluftströmungen zwischen dem Außengehäuse einer ersten Einweg-Filtereinheit und einer zweiten Einweg-Filtereinheit bzw. dem Filtermodul selbst entstehen und so in unerwünschter Weise Overspray-Partikel auf das Außengehäuse der Einweg-Filtereinheit gelangen. Nach dem Abtrocknen oder/und einem Aushärten des Oversprays können so Einweg-Filtereinheiten miteinander verkleben oder eine Einweg-Filtereinheit mit dem Filtermodul selbst verkleben. Um dies zu verhindern, können vor, während oder nach dem Einsetzen einer Einweg-Filtereinheit Trennmittel zur Verhinderung eines Verklebens angebracht werden. Das Trennmittel kann so beschaffen sein, dass es an Stellen aufbringbar ist, an denen eine unerwünschte Ablagerung von Overspray zu erwarten ist und nach dem Beschichtungsvorgang leicht zusammen mit dem abgeschiedenen Overspray zu entfernen ist.

Konkret können die Trennmittel eine Abdeckvorrichtung zum strömungsdichten Verbinden des Außengehäuses der Einweg-Filtereinheit mit dem Filtermodul oder/und der Einweg-Filtereinheit mit einer weiteren benachbart angeordneten Einweg-Filtereinheit aufweisen. Eine solche Abdeckvorrichtung kann beispielsweise ein Band, eine Folie oder/und eine pastöse Creme sein. Das Band kann beispielsweise selbstklebend sein und nach dem Einbringen der Einweg-Filtereinheit in das Filtermodul an den Stellen angebracht werden, an denen das Außengehäuse der Einweg-Filtereinheit an eine andere Einweg-Filtereinheit oder an das Filtermodul selbst angrenzt. Gleiches gilt für die Folie. Diese kann beispielsweise als Maskierung die Stellen, an denen eine Verklebung zu erwarten ist, abdecken. Zusätzlich oder alternativ kann die Folie um das Außengehäuse einer Einweg-Filtereinheit herum gelegt werden und so ein Verkleben des Verbindens mit benachbarten Einweg-Filtereinheiten oder dem Filtermodul selbst verhindern. Bei der pastösen Creme kann es sich beispielsweise um Vaseline handeln. Diese kann an den Anströmseiten des Außengehäuses oder/und zwischen den Außengehäusen von Einweg-Filtereinheiten aufgebracht werden und verhindert ein Verkleben oder Anhaften der Einweg-Filtereinheiten.

Bei einer Weiterentwicklung kann das Filtermodul eine Trennvorrichtung für ein Separieren von Filtereinheiten für die Entnahme der Filtereinheiten aus dem Filtermodul aufweisen. Bei einer solchen Trennvorrichtung kann es sich beispielsweise um eine Trennschnur oder eine Schneide handeln. Die Schneide kann beispielsweise als Draht oder/und als Messer ausgebildet sein und/oder beispielsweise mittels eines Hebels betätigbar sein. Für das Entnehmen einer Einweg-Filtereinheit aus dem Filtermodul kann die Trennvorrichtung betätigt werden, so dass ein möglicherweise vorhandenes Verkleben oder Anhaften gelöst wird und die Entnahme der Einweg-Filtereinheit problemlos vonstatten gehen kann. Das Betätigen kann beispielsweise darin bestehen, dass manuell an der Trennschnur gezogen wird, wodurch ein vorher möglicherweise verbindendes oder abdeckendes Band aufgetrennt wird. Eine solche Trennschnur könnte beispielsweise in einer Einweg-Filtereinheit oder einem Band integriert sein, das nach dem Einbringen einer Einweg-Filtereinheit aufgebracht wird. Die Schneide wäre hingegen beispielsweise an dem Filtermodul angebracht und könnte für den Trennvorgang manuell oder automatisch betätigt werden.

Bei einer Ausgestaltung der Erfindung weist die Filtervorrichtung eine Sicherheitseinrichtung auf, die von der Filtervorrichtung für den Betrieb bei einem nicht gekoppelten Filtermodul in einen sicherheitswirksamen Zustand bringbar ist.

Um die Sicherheit des Bedienpersonals in allen Betriebszuständen der Filtervorrichtung zu gewährleisten, muss insbesondere bei einem nicht gekoppelten Filtermodul - beispielsweise weil Manipulationen wie etwa eine Wartung oder/und ein Austausch einer Filtereinheit an dem Filtermodul oder/und der Filtervorrichtung vorzunehmen sind - die Filtervorrichtung in einen sicherheitswirksamen Zustand bringbar sein. Bei dem sicherheitswirksamen Zustand kann es sich beispielsweise um einen Betriebszustand handeln, in dem das Filtermodul oder/und die Filtervorrichtung nicht mit Overspray aufweisende Kabinenluft versorgt werden. Dies kann beispielsweise dadurch erreicht werden, dass die Zufuhr von mit Overspray beladener Kabinenluft zu dem Filtermodul oder/und der Filtervorrichtung unterbrochen wird. Dies kann durch Absperren der Zuluft zu dem Filtermodul oder/und der Filtervorrichtung, durch Umleiten der Zuluft oder durch ein weitgehendes Abschalten oder Unterbrechen des Beschichtungsbetriebs der Beschichtungsanlage erfolgen.

Alternativ oder zusätzlich kann die Sicherheitseinrichtung beispielsweise dazu ausgelegt sein, einen Zugang zu Bereichen der Filtervorrichtung , die bei einem nicht gekoppelten Filtermodul durch Bedienpersonal erreichbar sind, zu verhindern, zu erschweren oder/und zu detektieren.

Bei einer Ausführungsform weist das Filtermodul eine Verriegelungsvorrichtung auf, die eine selbsttätige Entkopplung des Filtermoduls von der Filtervorrichtung verhindert, solange an dem Zuluftanschluss oder/und dem Abluftanschluss ein Gasdruck herrscht, der über dem Umgebungsdruck liegt. Übersteigt der Gasdruck in dem Zuluftanschluss oder/und dem Abluftanschluss den Umgebungsdruck, besteht die Gefahr, dass mit gesundheitsschädlichen Partikeln beladene Kabinenluft in einem entkoppelten Zustand des Filtermoduls in die Umgebung entweicht. Dies stellt eine Gefahr für Bedienpersonal oder/und die Umgebung des Filtermoduls dar und ist deshalb zu vermeiden. Die Verriegelungsvorrichtung verhindert eine Entkopplung des Filtermoduls, solange ein solcher Zustand vorherrscht. Die Sicherheitsvorrichtung kann betätigbar sein, beispielsweise manuell durch Bedienpersonal oder automatisiert durch die Filtervorrichtung. Das genannte Gasdruckverhältnis kann auch in vorteilhafter Weise an dem Filtermodul oder der Filtervorrichtung signalisiert bzw. angezeigt werden.

Zusätzlich oder alternativ kann eine Ausführungsform einer Filtervorrichtung eine Überströmvorrichtung aufweisen, die ein Überströmen von Umgebungsluft in die Filteranlage im Bereich der Koppelstelle für den Fall ermöglicht, dass der Gasdruck in dem Filtermodul niedriger als der Umgebungsdruck ist. In einem solchen Druckverhältnis kann eine Entkopplung des Filtermoduls von der Filtervorrichtung problematisch sein, da der Unterdruck das Filtermodul gewissermaßen festsaugt. Die Überströmvorrichtung kann diesem Umstand abhelfen, indem die Druckdifferenz beispielsweise durch Betätigung der Überströmvorrichtung verringert und ein Entkoppeln ermöglicht wird. Das Betätigen kann manuell durch Bedienpersonal oder zentral durch die Filtervorrichtung oder/und die Beschichtungsanlage erfolgen. Die Überströmvorrichtung kann beispielsweise einen Spalt oder/und eine Öffnung im Bereich einer Abdichtung des Filtermoduls zu Filtervorrichtung hin herstellen. Gleichzeitig kann auch das Druckverhältnis an dem Filtermodul oder der Filtervorrichtung signalisiert werden.

Bei einer Ausführungsform der Filtervorrichtung weist das Filtermodul eine Löscheinrichtung auf. Bei einem Filtermodul handelt es sich um einen Raum, der gegenüber der Umgebung relativ dicht gepackt ist. Außerhalb des Filtermoduls liegende Brandschutzeinrichtungen können im Falle eines Brandes innerhalb des Filtermoduls vergleichsweise wenig ausrichten. Vorteilhafterweise sind Komponenten des Filtermoduls oder der Filtervorrichtung an sich aus feuerhemmenden Materialien gefertigt. Somit besteht im Brandfall eine gewisse Haltbarkeit dieser Komponenten. Diese Haltbarkeit bzw. Widerstandsfähigkeit kann verstärkt werden, indem das Filtermodul eine Löscheinrichtung aufweist. Mit der Löscheinrichtung können beispielsweise Brandherde im Inneren des Löschmoduls gelöscht werden.

In diesem Zusammenhang ist es von Vorteil, wenn die Löscheinrichtung eine Verteileinrichtung für eingeleitetes Löschmaterial aufweist. Die Verteileinrichtung kann das eingeleitete Löschmaterial an vorgesehene und für einen Löschvorgang besonders geeignete Stellen in dem Filtermodul oder/und den Einweg-Filtereinheiten flächig verteilen. Die Verteilung kann beispielsweise durch ein in dem Filtermodul vorhandenes internes Leitungssystem oder ein Düsensystem realisiert werden.

In diesem Zusammenhang kann es vorteilhaft sein, wenn das Filtermodul eine Anschlussstelle zu einem Löschmaterialleitungssystem aufweist. Die Anschlussstelle kann in vorteilhafter Weise mit der Filtervorrichtung im Rahmen eines Koppelns des Filtermoduls mit der Filtervorrichtung gekoppelt werden.

Alternativ hierzu kann das Filtermodul einen Speicher für ein Löschmaterial aufweisen. Der Speicher kann über die Verteileinrichtung das Löschmaterial in dem Filtermodul verteilen und somit gewissermaßen eine autarke Brandbekämpfung in dem Filtermodul ermöglichen.

Die Anschlussstelle zu einem Löschmaterialleitungssystem ist vorteilhafterweise eine fluiddichte Verbindung und kann das Einbringen von Löschmaterial über ein in der Filtervorrichtung oder einer übergeordneten Einheit wie beispielsweise einem Gebäude der Beschichtungsanlage vorhandene Brandlöschanlage ermöglichen.

Eine Aktivierung der Löscheinrichtung kann manuell von außen durch Bedienpersonal, beispielsweise durch Betätigen eines Ventils, erfolgen. Vorteilhafterweise kann die Aktivierung auch durch einen Sensor in dem Filtermodul selbst oder in der Filtervorrichtung erfolgen. Eine automatische Aktivierung der Löscheinrichtung durch einen solchen Sensor oder durch ein Signal der Filtervorrichtung oder einer anderen übergeordneten Einrichtung kann beispielsweise über die Koppelstelle erfolgen, sofern sie eine elektrische Schnittstelle für Daten oder/und Energie aufweist. Das Betätigen der Löscheinrichtung kann wiederum - sofern das Betätigen nicht zentral ausgelöst worden ist - an eine zentrale Instanz wie beispielsweise die Filtervorrichtung oder die Beschichtungsanlage gemeldet werden.

Bei einer Ausführungsform der erfindungsgemäßen Filtervorrichtung weist die Filtervorrichtung eine elektrostatisch arbeitende Filterstufe auf. Das Vorsehen einer elektrostatisch arbeitenden Filterstufe verbessert die Gesamtfilterwirkung der Filtervorrichtung. Dabei kann die elektrostatisch arbeitende Filterstufe beispielsweise in der Filtervorrichtung selbst, insbesondere an/in dem Filtermodul angeordnet sein. Das Vorsehen der elektrostatisch arbeitenden Filterstufe an/in dem Filtermodul ermöglicht eine besonders einfache Wartung der elektrostatisch arbeitenden Filterstufe, da das Filtermodul von der Filtervorrichtung entkoppelt werden kann. Insbesondere kann das bei der elektrostatischen Filterung anfallende Retentat, also die aus der Kabinenluft ausgefilterten Bestandteile, direkt in dem Filtermodul oder/und einer Einweg-Filtereinheit zugeordnet verbleiben und bei einer Wartung des Filtermoduls oder/und einem Austausch einer Einweg-Filtereinheit entnommen werden.

Konkret kann eine solche elektrostatisch arbeitende Filterstufe stromabwärts des Zuluftanschlusses oder/und stromaufwärts des Abluftanschlusses, beispielsweise innerhalb oder an dem Filtermodul angeordnet sein.

Alternativ kann die elektrostatisch arbeitende Filterstufe mehreren Filtermodulen zugeordnet sein. Dann kann es sinnvoll sein, die elektrostatisch arbeitende Filterstufe baulich von dem Filtermodul getrennt als eigenständiges Element in der Filtervorrichtung wechselbar einzubauen.

Die Aufgabe wird auch durch eine Beschichtungsanlage zum Lackieren von Fahrzeugbauteilen oder/und Fahrzeugkarosserien mit einer wie vorstehend beschriebenen Filtervorrichtung gelöst.

Bei einer solchen Beschichtungsanlage kann es vorteilhaft sein, wenn die Beschichtungsanlage für den Zuluftanschluss oder/und den Abluftanschluss eine Vorrichtung zur Verhinderung eines Zutritts durch unbefugte Personen aufweist. Wenn ein Filtermodul nicht mit der Filtervorrichtung verbunden ist, besteht grundsätzlich die Möglichkeit, das Bedienpersonal in die Nähe oder direkt in den Zuluftanschluss oder/und den Abluftanschluss gelangen kann. Dies kann zu gesundheitsschädlichen Einflüssen durch Schall oder partikelbeladene Gasströme führen. Um dies zu verhindern oder zumindest zu erschweren, kann eine solche Vorrichtung zur Verhinderung eines Zutritts durch unbefugte Personen vorgesehen sein. Eine solche Vorrichtung kann für eine oder mehrere Filtermodule bzw. deren Anschlussstellen an der Filtervorrichtung vorgesehen sein.

Bei einer bevorzugten Ausführungsform weist diese Sicherungsvorrichtung eine mechanische Zutrittsverhinderung, beispielsweise eine Klappe, eine Tür, ein Band, ein Gitter, ein Seil oder Ähnliches mit Absperrfunktion auf. Alternativ oder zusätzlich kann ein für eine Bedienperson wahrnehmbares optisches oder/und akustisches Signal ausgehbbar sein. Des Weiteren kann alternativ oder zusätzlich eine Schaltfunktion durch die Sicherungsvorrichtung realisiert werden. Beispielsweise kann durch eine Lichtschranke, eine Schaltmatte, einen Bewegungsmelder, oder Ähnliches die Beschichtungsanlage oder/und die Filtervorrichtung im Fall eines Zutritts oder Annäherns einer Bedienperson zu dem Zuluftanschluss oder/und dem Abluftanschluss herunterregeln oder abschalten. Eine Kombination der vorgenannten Möglichkeiten ist möglich.

Die Aufgabe wird außerdem durch ein Verfahren zum Wechseln eines Filtermoduls einer wie vorstehend beschriebenen Filtervorrichtung mit den Schritten:
Signalisieren einer Wartungsanforderung für eine Filtereinheit oder/und ein Filtermodul;
Entkoppeln des Filtermoduls von der Filtervorrichtung;
Durchführen der Wartung; und
Koppeln eines Filtermoduls mit der Filtervorrichtung.

Bei einer Ausgestaltung des Verfahrens kann der Schritt des Durchführens einer Wartung ein Austauschen zumindest einer beladenen Filtereinheit gegen eine unbeladene Filtereinheit umfassen.

Bei einer weiteren Ausgestaltung des Verfahrens wird vor dem Signalisieren einer Wartungsanforderung ein Schritt durchgeführt, der ein Ermitteln eines Wechselbedarfs für eine Filtereinheit oder/und ein Filtermodul umfasst.

Besonders bevorzugt kann bei dem Verfahren vorgesehen sein, dass nach dem Schritt des Entkoppelns eine Absicherung des Zuluftanschlusses oder/und des Abluftanschlusses erfolgt.

Dies kann insbesondere umfassen, dass die Absicherung ein unbeabsichtigtes Betreten des Zuluftanschlusses oder/und des Abluftanschlusses verhindert, erschwert oder/und detektiert.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: in einer Teil-Querschnittsansicht eine Beschichtungsanlage mit einer erfindungsgemäßen Filtervorrichtung;
- Figur 2: in einer Teil-Längsschnittansicht die Beschichtungsanlage der Figur 1;
- Figur 3: in einer schematischen seitlichen Schnittansicht eine erfindungsgemäße Filtervorrichtung mit einem gekoppelten Filtermodul gemäß einer ersten Ausführungsform;
- Figur 4: in einer schematischen seitlichen Schnittdarstellung eine weitere erfindungsgemäße Ausführungsform einer Filtervorrichtung mit Filtermodulen;
- Figur 5: eine schematische Seitendarstellung einer erfindungsgemäßen Ausführungsform einer Filtervorrichtung mit Filtermodul, das eine Löschvorrichtung aufweist;
- Figur 6: die Ausführungsform der Figur 5 mit einem Löschmittelspeicher;
- Figuren 7-11: verschiedene Darstellungen eines Filtermoduls mit Trennfunktion; und
- Figur 12: in einem Ablaufdiagramm ein Verfahren zum Wechseln einer Filtereinheit.

### BESCHREIBUNG BEVORZUGTER AUSFÜHRUNGSBEISPIELE

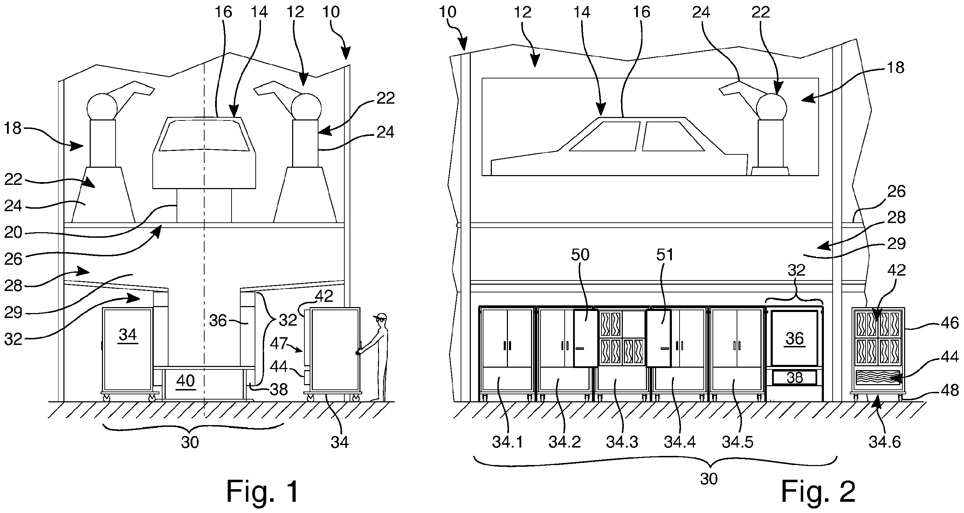

Die Figuren 1 und 2 zeigen in einer schematischen Teil-Querschnittsansicht bzw. Teil-Längsschnittansicht eine Beschichtungsanlage 10 mit einer Lackierkabine 12, in der Gegenstände 14 lackiert werden. Als Beispiel für zu lackierende Gegenstände 14 sind in den Figuren Fahrzeugkarosserien 16 gezeigt. Bevor diese zu einer solchen Lackierkabine 12 gelangen, werden sie in nicht eigens gezeigten Vorbehandlungsstationen beispielsweise entfettet, mit Korrosionsschutz versehen oder/und gereinigt. Eine solche Lackierkabine 12 weist einen oben angeordneten Beschichtungstunnel 18 mit einer Decke (nicht abgebildet), welche in üblicher Weise als untere Begrenzung eines Luftzuführraumes mit einer Filterdecke ausgebildet sein kann.

Die Fahrzeugkarosserien 16 werden mit einem im Beschichtungstunnel 18 untergebrachten Fördersystem 20 von einer Eingangsseite des Beschichtungstunnels 18 zu einer Ausgangsseite transportiert. Im Inneren des Beschichtungstunnels 18 befinden sich Applikationseinrichtungen 22, welche hier beispielhaft als mehrachsige Applikationsroboter 24 gezeigt sind. Mittels der Applikationsroboter 24 können die Fahrzeugkarosserien 16 mit dem entsprechenden Beschichtungsmaterial beschichtet werden.

Nach unten hin ist der Beschichtungstunnel 18 über einen begehbaren Gitterrost 26 zu einem darunterliegenden Anlagenbereich 28 hin offen. In diesem Anlagenbereich 28 befindet sich eine Filtervorrichtung 30, in welcher von der Kabinenluft mitgeführte Overspray Partikel abgetrennt werden.

Hierfür wird in die Beschichtungskabine 12 von oben während eines Beschichtungsvorgangs Luft zugeführt und durch den Beschichtungstunnel 18 hindurch nach unten zu dem Anlagenbereich 28 gefördert. Dabei nimmt die Luft im Beschichtungstunnel 18 vorhandenen Overspray auf und führt diesen mit sich. Die auf diese Weise mit Overspray beladene Luft wird mittels einer Luftleiteinrichtung 29 zu der Filtervorrichtung 30 geleitet. Die Filtervorrichtung 30 ist also fluidisch mit dem Beschichtungstunnel 18 über die Luftleiteinrichtung 29 verbunden. Die Filtervorrichtung 30 weist einen Andockbereich 32 auf, an dem Filtermodule 34 mit der Filtervorrichtung 30 gekoppelt werden können.

Wie den Figuren 1 und 2 zu entnehmen ist, erstreckt sich die Filtervorrichtung 30 unterhalb des Beschichtungstunnels 18 entlang der Längsausrichtung des Beschichtungstunnels 18 und weist eine Reihe von Filtermodulen 34.1-34.6 auf, die mit der Filtervorrichtung 30 wirksam gekoppelt bzw. koppelbar sind.

Für eine filterwirksame Kopplung eines Filtermoduls 34 mit der Filtervorrichtung 30 sind in dem Andockbereich 32 der Filtervorrichtung 30 ein Zuluftanschluss 36 und ein Abluftanschluss 38 vorgesehen. Über den Zuluftanschluss 36 wird aus dem Beschichtungstunnel 18 kommend die mit Overspray beladene Kabinenluft dem Filtermodul 34 zugeführt, durchströmt dieses, verlässt das Filtermodul 34 weitgehend von Overspray befreit und gelangt über den Abluftanschluss 38 wieder in die Filtervorrichtung 30. Dort ist eine Sammelleitung 40 vorgesehen, welche die gereinigte Luft gegebenenfalls einer Nachreinigung oder einer Konditionierung zuführt, um diese dann gegebenenfalls wieder als Umluft in die Beschichtungskabine 12 zu leiten.

Für eine fluiddichte Kopplung zwischen dem Filtermodul 34 unter der Filtervorrichtung 30 im Andockbereich 32 weist das Filtermodul 34 an seiner Rückseite 47 einen Zulufteinlass 42 und einen Abluftauslass 44 auf. Diese sind mit dem entsprechenden Zuluftanschluss 36 und dem Abluftanschluss 38 so koppelbar, dass ein ungehindertes Überströmen zwischen der Filtervorrichtung 30 und dem Filtermodul 34 stattfinden kann.

Wie aus Figur 2 ersichtlich ist, ist die Beschichtungsanlage 10 in der vorliegenden Ausführungsform der Filtervorrichtung 30 mit insgesamt zwölf Filtermodulen 34 versehen, von denen eine erste Hälfte in Figur 2 zu sehen ist. Jedes Filtermodul 34 ist mit einem stabilen Gehäuse 46 versehen, das auf Rollen 48 gelagert ist, so dass ein Filtermodul 34 von einer Bedienperson bewegt werden kann. Selbstverständlich sind auch automatisiert bewegbare Filtermodule 34 möglich.

Wie in Figur 2 erkennbar ist, befinden sich die Filtermodule 34.1-34.5 in einem eingekoppelten Zustand bezüglich der Filtervorrichtung 30. Das Filtermodul 34.6 hingegen befindet sich in einem entkoppelten Zustand, der Zuluftanschluss 36 und der Abluftanschluss 38 der Filtervorrichtung 30 sowie der Zulufteinlass 42 und der Abluftauslass 44 des Filtermoduls 34.6 sind erkennbar. Verglichen mit den Filtermodulen 34.1-34.5 befindet sich also das Filtermodul 34.6 in einer um 180° gedrehten Stellung. Entsprechend ist der Andockbereich 32 der Filtervorrichtung 30 erkennbar.

In der in Figur 2 gezeigten Ausführungsform weisen die Filtermodule 34.1-34.6 auf ihrer der Filtervorrichtung 30 abgewandten Seite jeweils zwei Schwenktüren 50, 51 auf, mittels deren Hilfe die von der Filtervorrichtung 30 abgewandte Seite des Filtermoduls 34 öffenbar und damit beispielsweise inspizierbar ist. Es können von hier aus auch gegebenenfalls eine Entnahme der Filtereinheiten unterstützende Maßnahmen wie beispielsweise ein Aufprägen einer Kraft auf die Filtereinheiten, beispielsweise manuell oder mittels eines Werkzeugs wie beispielsweise einem Stempel, eingeleitet werden.

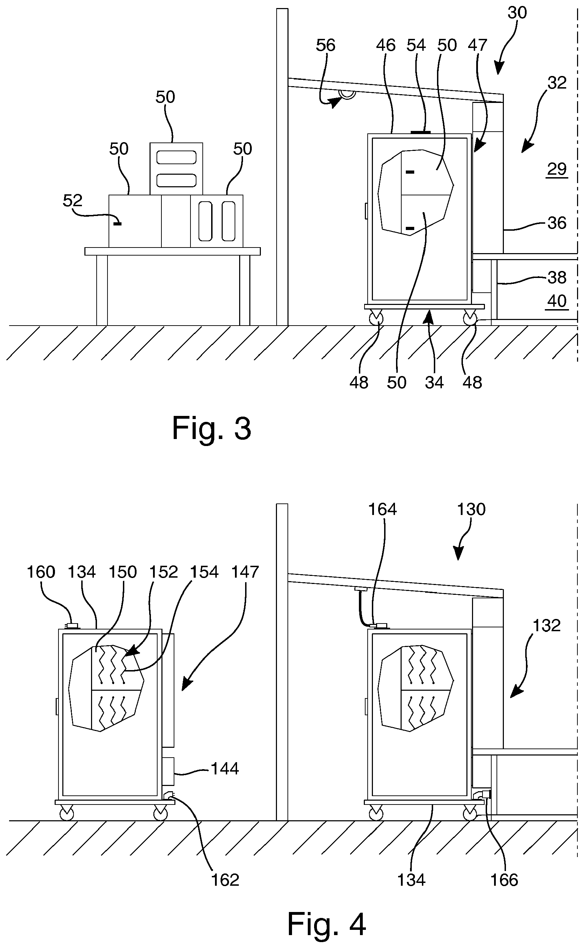

Figur 3 veranschaulicht in einer schematischen Seitenansicht einen Teil der Filtervorrichtung 30 in einer seitlichen schematisierten Schnittansicht. Es ist in Figur 3 der Andockbereich 32 erkennbar, der von der Luftleiteinrichtung 29 über den Zuluftanschluss 36 mit Kabinenluft versorgt wird. Des Weiteren ist der Abluftanschluss 38 erkennbar, der mit der Sammelleitung 40 zum Abtransport der gereinigten Kabinenluft gekoppelt ist. Bei der in Figur 3 dargestellten Situation ist ein Filtermodul 34 mit seinem Zulufteinlass 42 und seinem Abluftauslass 44, die an der Rückseite 47 angeordnet sind, an den Andockbereich 32 der Filtervorrichtung 30 gekoppelt.

Das Filtermodul 34 ist als fahrbarer Wagen mit einem stabilen Gehäuse 46 und Rädern 48 ausgestaltet und kann von einer Bedienperson über einen ebenen Untergrund bewegt werden. Innerhalb des Gehäuses 46 des Filtermoduls 34 sind Einweg-Filtereinheiten 50 angeordnet, von denen einige außerhalb des Filtermoduls 34 und auch außerhalb der Filtervorrichtung 30 aufgestapelt auf einem Tisch dargestellt sind. Die Einweg-Filtereinheiten können als mit Standard-Außenabmessungen erhältliche, handelsübliche Filterboxen ausgebildet sein, die in großen Stückzahlen als Zukauf-Filtereinheiten beziehbar sein können. Die Einweg-Filtereinheiten 50 können ein recyclingfähiges Material aufweisen, wie beispielsweise Kartonage, und können so nach Beladung mit Overspray dem Filtermodul 34 entnommen und beispielsweise thermisch entsorgt werden. Die durch die Entsorgung rückgewonnene Energie kann wiederum der Beschichtungsanlage 10 zuführbar sein.

Die einzelnen Beschichtungselemente 50 weisen eine Kennzeichnung 52 auf. Bei der Kennzeichnung 52 kann es sich beispielsweise um eine rein optisch erfassbare Kennzeichnung wie beispielsweise einen Barcode handeln. Alternativ oder zusätzlich kann die Kennzeichnung 52 auch als RFID-Tag ausgebildet sein und somit für eine berührungslose passive Übertragung von Informationen geeignet sein. In dem letzteren Fall, also bei einer berührungslosen elektronischen Übertragungsmöglichkeit von Informationen durch die Kennzeichnung 52, ist beispielsweise an dem Filtermodul 34 ein Transpondermodul 54 vorgesehen. Wesentliche Inhalte, die mittels der Kennzeichnung 52 kommuniziert werden können, sind beispielsweise der Hersteller der Einweg-Filtereinheit 50, eine Serien- oder Chargennummer, die Art des Filtermaterials, den Abscheidegrad der Einweg-Filtereinheit oder/und das Abscheidegut, für das die Einweg-Filtereinheit 50 geeignet ist.

Im Falle einer rein optischen Kodierung kann anstelle des Transpondermoduls 54 eine entsprechende optische Kennzeichnung an dem Filtermodul 34 angebracht sein. In jedem Fall - optische oder/und elektrische/funkbasierte Datenübertragung - kann das Filtermodul 34 ebenfalls eine eindeutige Kodierung besitzen, die ähnliche Daten wie die Kennzeichnung 52 der Einweg-Filtereinheit 50 kommuniziert. In jedem Fall ist es von Vorteil, wenn der Filterwagen 34 so kodiert ist, dass entweder durch die Bedienperson oder durch ein automatisches Auslesen der Kodierungen sichergestellt werden kann, dass das Filtermodul bzw. der Filterwagen 34 nicht mit einer ungeeigneten Einweg-Filtereinheit 50 bestückt werden kann.

Bei der in der Figur 3 dargestellten Ausführungsform weist die Filtervorrichtung 30 außerdem eine Signaleinrichtung 56 auf. Um die Filterfunktion des Filtermoduls 34 im gekoppelten Zustand mit der Filtervorrichtung 30 sicher zu gewährleisten, muss das Filtermodul 34 in einer definierten Position fixiert werden. In dieser Position müssen sich zumindest der Zulufteinlass 46 und der Abluftauslass 44 auf der Rückseite 47 des Filtermoduls 34 in einer Wirkverbindung mit den komplementären Anschlüssen - also dem Zuluftanschluss 36 und dem Abluftanschluss 38 des Andockbereichs 32 - befinden. Diese Wirkverbindung ist entsprechend den Anforderungen gasdicht oder/und partikeldicht zu gestalten. Es ist von Vorteil, wenn das Vorhandensein einer sicheren Wirkverbindung zwischen Filtermodul 34 und der Filtervorrichtung 30 signalisierbar ist. Diese Signalisierung kann beispielsweise durch die Signaleinrichtung 56 realisiert werden. Die Signaleinrichtung 56 ist im Bereich des jeweiligen Filtermoduls 34 - beispielsweise gut für eine Bedienperson erkennbar - angeordnet und kann unter anderem dafür ausgelegt sein, eine Beladung - beispielsweise eine Endbeladung - des Filtermoduls und eben auch das Einnehmen einer sicheren Wirkverbindung zwischen Filtermodul 34 und Filtervorrichtung 30 zu signalisieren. Der Signalisierungsvorgang kann beispielsweise das Abgeben eines optischen Signals in Form einer entsprechenden Farbe, einer Blinkfrequenz, etc. oder ein akustisches Signal, das für eine Bedienperson wahrnehmbar ist, oder ein rein elektrisches Signal zur Weiterverarbeitung umfassen.

Die Signaleinrichtung 56 kann neben der reinen Funktion einer Signalabgabe auch bei einer bevorzugten Ausführungsform die Funktion einer Ermittlung der Position des Filtermoduls 34 übernehmen. Selbstverständlich könnte eine solche Funktion auch in einem separaten Bauteil realisiert sein. Die Ermittlung der Position des Filtermoduls 34 kann dabei einerseits darin bestehen, das Fehlen oder Vorhandensein des Filtermoduls 34 zu detektieren. Alternativ oder zusätzlich könnte vorgesehen sein, die genaue Positionierung des Filtermoduls 34 beispielsweise durch einen oder mehrere Sensoren wie etwa einer Lichtschranke, einen Ultraschallsensor oder durch mechanische oder elektrische Kontakte festzustellen.

Während die Signaleinrichtung 56 in dem vorliegenden Ausführungsbeispiel oberhalb des Filtermoduls 34 angeordnet ist, kann die Detektion des Einnehmens einer Wirkverbindung durch das Filtermodul 34 mit der Filtervorrichtung 30 auch durch eine Reihe anderer Detektoren bzw. Detektionsmöglichkeiten erfolgen. Hier können beispielsweise einfache mechanische oder/und elektrische Kontakte zwischen dem Filtermodul 34 und der Filtervorrichtung 30, beispielsweise in dem Andockbereich 32 vorgesehen sein. Derartige Kontakte können auch an dem Boden angebracht sein und beispielsweise ein Berühren durch eines der Räder 48 des Filtermoduls 34 erkennen.

Des Weiteren können zusätzlich oder alternativ Sensoren zum Erkennen eines Druckabfalls zwischen Zuluftanschluss 36 und Abluftanschluss 38 vorhanden sein. Bei der Auswertung des Druckabfalls beispielsweise kann auf die Filtercharakteristik eines Filtermoduls 34 abgestellt werden. Dies stellt eine besonders vorteilhafte Ausführungsform dar, da somit gleichzeitig das Gekoppeltsein des Filtermoduls 43 einerseits und die strömungstechnisch richtige Kopplung zwischen Filtermodul 34 und Fördervorrichtung 30 andererseits erkannt und berücksichtigt wird.

Die Figur 4 veranschaulicht in einer der Figur 3 ähnlichen schematischen Seitendarstellung eine alternative Ausführungsform eines Filtermoduls 134. Merkmale der Figur 4 und aller weiterer noch folgenden Ausführungsformen, die Merkmalen der Figur 3 oder einer anderen vorhergehenden Ausführungsform gleichen oder ähnlich sind, werden mit Bezugszeichen versehen, zu denen 100 oder ein Vielfaches davon addiert wurde. Diese Merkmale werden nicht noch mal gesondert erläutert, um Wiederholungen zu vermeiden.

Das Filtermodul 134 weist hinsichtlich seines grundsätzlichen inneren und äußeren Aufbaus keine wesentlichen Unterschiede zu dem Filtermodul 34 der Figur 3 auf. Es besitzt jedoch anstelle des Transpondermoduls 54 zwei Stecker 160, 162. Selbstverständlich können die Stecker auch zusätzlich angebracht sein. Die beiden Stecker 160, 162 sind alternativ jeweils als einzelner Stecker oder gemeinsam in einer Ausführungsform realisierbar. Ein erster Stecker 160 befindet sich an der Oberseite des Filtermoduls 134 und ist im gekoppelten Zustand des Filtermoduls 134 beispielsweise an der dem Andockbereich 132 abgewandten Seite durch eine Bedienperson erreichbar. Ein zweiter Stecker 162 befindet sich an der dem Andockbereich 132 zugewandten Seite, also der Rückseite 147, des Filtermoduls 134 im Bereich des Abluftauslasses 144.

Entsprechend weist die Filtervorrichtung 130 der Beschichtungsanlage zugehörige Buchsen 164, 166 auf, die mit den Steckern 160, 162 in Wirkverbindung gebracht werden können. Das Koppeln von Stecker 160, 162 und Buchse 164, 166 kann manuell nach dem Koppeln des Filtermoduls 134 mit der Filtervorrichtung 130 durch eine Bedienperson erfolgen. Dies ist in der in Figur 4 gezeigten Ausführungsform beispielsweise bei dem Stecker 160 der Fall, der an der dem Andockbereich abgewandten Seite des Filtermoduls 134 angeordnet ist. Alternativ kann ein Koppeln eines Steckers 162 mit einer zugehörigen Buchse 166 selbsttätig während eines Einkoppelvorgangs des Filtermoduls 134 mit der Filtervorrichtung 130 erfolgen. Dies ist in der Figur 4 für den Stecker 162 gezeigt, der an der Rückseite 147 des Filtermoduls 134 angeordnet ist und der mit der Buchse 166 koppelt, die im Andockbereich 132 angeordnet ist.

Es ist in diesem Zusammenhang ohne Belang, ob Stecker oder Buchse an dem Filtermodul 134 angeordnet sind. Auch kann die konkrete mechanische Ausgestaltung von Stecker und Buchse weitgehend an die Erfordernisse der Kopplung angepasst sein. Wenn beispielsweise für den Stecker 166, welcher sich an der dem Andockbereich 132 zugewandten Seite des Filtermoduls 134 befindet und damit in die gleiche Richtung zu kontaktieren ist, in welcher das Filtermodul 134 auf die Filtervorrichtung 100 zubewegt wird, eine möglichst einfache und sichere Kopplung zu erfolgen hat, kann ein metallischer Kontakt vorgesehen sein, der in der Bewegungsrichtung gefedert gelagert ist. Wenn hingegen beispielsweise für den sich an der Oberseite des Filtermoduls 134 befindlichen Kontakt eine hohe Wahrscheinlichkeit besteht, bei einem Abkoppeln des Filtermoduls 134 nicht ausgesteckt zu werden, kann eine magnetisch-mechanische Kopplung vorgesehen sein, die bei einem Ausüben einer Kraft auf die Stecker-Buchse-Verbindung bei einem Überschreiten einer Kraftschwelle zuverlässig öffnet. Insgesamt soll das Begriffspaar "Stecker-Buchse" hier im Sinne einer geeigneten Kopplung zweier oder mehrerer elektrischer Leiter mittels einer mechanischen Vorrichtung verstanden werden.

Das Koppeln eines Steckers 160,162 mit der zugehörigen Buchse 164, 166 kann beispielsweise eine Übertragung von Signalen zwischen der Filtervorrichtung 130 und dem Filtermodul 134 oder/und die Übertragung von Energie an das Filtermodul 134 ermöglichen.

Die dem Filtermodul 134 über eine der Stecker-Buchse-Verbindungen bereitgestellte elektrische Energie kann beispielsweise innerhalb des Filtermoduls 134 in Wärmeenergie umgewandelt werden, um beispielsweise nicht ausgehärtete Beschichtungspartikel in einen ausgehärteten Zustand zu überführen. Diese Maßnahme kann die Lagerung und/oder den Transport eines beladenen Filtermoduls 134 nachhaltig vereinfachen. Die hier in Rede stehenden Stoffe sind als potentielles Gefahrgut bei Transport und Lagerung wesentlich einfacher als Feststoffe handzuhaben.

In diese Sinne sind bei der vorliegenden Ausführungsform an den einzelnen Filtereinheiten 150 Heizelemente 152 angebracht. Diese können beispielsweise als Heizdrähte 154 oder Heizflächen ausgebildet sein, mit denen eine elektrisch induzierte Erwärmung einer Filtereinheit 150 bewirkt werden kann. Dabei können auch Temperatursensoren im Bereich der Filterelemente 150 vorgesehen sein, die eine Regelung der Temperatur der Filterelemente 150 über ein Rückkopplungssignal ermöglichen. Das Überschreiten bestimmter Schwellentemperaturen für einen bestimmten Zeitraum führt je nach ausgefiltertem Overspray-Anteil zu einem vollständigen oder zumindest teilweisen Aushärten des Oversprays und reduziert in Folge Probleme beim Transport eines solchen Gefahrenguts.

Die Übertragung von Signalen über eine oder beide Verbindungen, hier beispielsweise als Stecker-Buchse-Verbindungen mit Steckern 160, 162 und Buchsen 164, 166 ausgeführt, kann beispielsweise der Kommunikation von Daten der Filtereinheiten 150 wie beispielsweise einer Herstellerkennung, einer Seriennummer, eines Filtermaterials, einem Abscheidegrad, einer Eignung für Abscheidegut sowie einer Gesamt- oder/und einer Rest-Filterkapazität dienen. Diese Daten können beispielsweise über eine oder mehrere Verbindungen/Schnittstellen der Filtervorrichtung 130 übermittelt werden. Umgekehrt können auch in die umgekehrte Richtung Daten der Filtervorrichtung 130 auf die Filtereinheiten 134 übertragen werden. Sind diese mit entsprechenden Speicherbausteinen versehen, kann dort Information gespeichert werden. Bei den Speicherbausteinen kann es sich beispielsweise um RFID-Transponder handeln. In diesem Fall kann die Datenübermittlung auch drahtlos ohne physische Verbindung zwischen dem Speicherbaustein und der Filtervorrichtung 130 erfolgen. Beispielsweise können als Daten Informationen über das abgeschiedene Material oder/und dessen Gefahrgutklasse, Informationen über den Start und die Dauer der Abscheidung o.ä. übertragen und gespeichert werden.

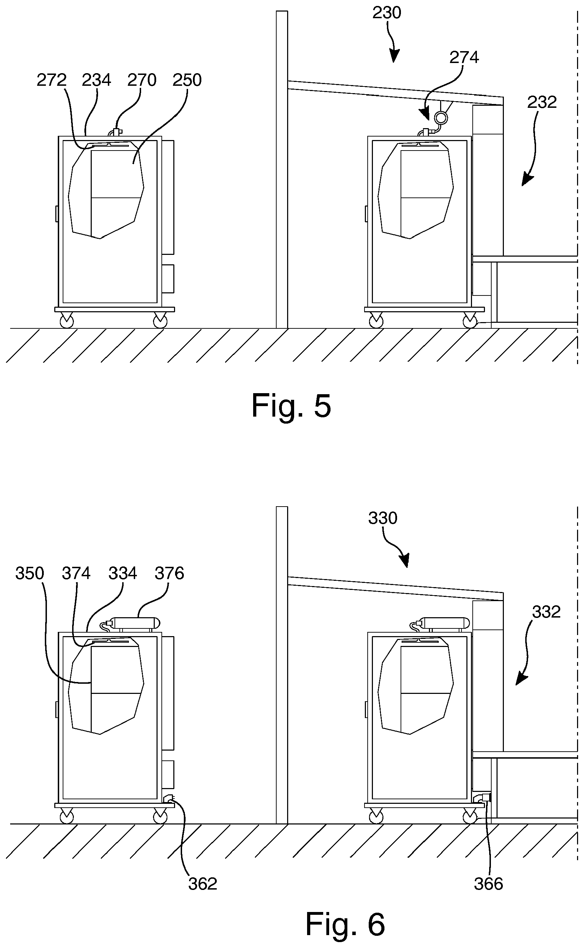

Figur 5 veranschaulicht in einer weiteren schematisierten Seitenansicht eine weitere Ausführungsform einer Filtervorrichtung 234 mit einem zugehörigen Filtermodul 230. Die Ausführungsform der Figur 5 zeigt ein Filtermodul 234, das wie in den vorhergehenden Ausführungsformen mit einzelnen Filtereinheiten 250 bestückbar ist. An der Oberseite des Filtermoduls 234 ist ein Löschmittelanschluss 270, im Inneren des Filtermoduls 234 ist eine Löschmittelverteileinrichtung 272 angebracht. Löschmittelanschluss 270 und Löschmittelverteileinrichtung 272 sind miteinander verbunden und dienen einer Zuführung und Verteilung von Löschmittel im Inneren des Filtermoduls 234. Bei der Löschmittelverteileinrichtung 272 kann es sich beispielsweise um ein Leitungssystem oder um eine mit Durchlässen versehene Fläche oder Körper handeln, welche für eine gleichmäßige Verteilung des Löschmittels im Inneren des Filtermoduls 234 unter Berücksichtigung der Anordnung der Filtereinheiten 205 sorgt. Als Löschmittel kommen beispielsweise Flüssigkeiten, Pulver oder Gase mit entsprechenden Löscheigenschaften in Frage.

Der Löschmittelanschluss 270 kann gleichzeitig mit dem Koppeln des eigentlichen Filtermoduls 234 mit der Filtervorrichtung 230 mit einem auf Seiten der Filtervorrichtung 230 oder der gesamten Beschichtungsanlage vorhandenen Löschmittelsystem verbunden werden. Das Verbinden des Löschmittelanschlusses 270 mit einer entsprechenden Löschmittelverteilleitung 274 auf Seiten der Filtervorrichtung 230 kann manuell durch ein Bedienpersonal erfolgen. Es kann aber auch vorgesehen sein, dass der Löschmittelanschluss 270 gleichzeitig mit dem Einkoppeln des Filtermoduls 234 an der Filtervorrichtung 230 ohne weiteres Zutun von Bedienpersonal mit der Löschmittelverteilleitung 274 erfolgt. Auf diese Weise kann ein zentral vorhandenes Löschmittelsystem mit den einzelnen Filtermodulen 234 verbunden werden und so im Brandfall ein zielgerichtetes und effizientes Löschen erfolgen.

Bei einer Weiterbildung können in den einzelnen Filtermodulen 234 ein oder mehrere Sensoren zur Erkennung eines Brandfalls vorhanden sein. Die Sensoren können beispielsweise die in dem Filtermodul 234 herrschende Temperatur, einen Temperaturverlauf oder/und das Vorhandensein von Rauch oder anderen Brandzeichen detektieren und direkt einen Löschvorgang an dem Filtermodul 234 über eine Betätigung eines entsprechenden Ventils an der Löschmittelverteilleitung 274 öffnen. Alternativ oder zusätzlich können die Sensoren ein entsprechendes Signal an die Filtervorrichtung 230 oder die Beschichtungsanlage weiterleiten, welche dann einen Löschvorgang zentral starten kann.

Figur 6 zeigt eine Alternative zu der Ausführungsform der Figur 5. Die Filtervorrichtung 330 mit Filtermodul 334 der Figur 6 veranschaulicht eine Filtervorrichtung 330, die keinen Anschluss an ein zentrales Löschmittelverteilsystem aufweist. Aus diesem Grund ist das Filtermodul 334 der Figur 6 mit einem eigenen Löschmitteltank 376 versehen, der eine bestimmte Menge eines Löschmittels speichert und dieses auf Anforderung des Filtermoduls 334 freigeben und in das Innere des Filtermoduls 334 entlassen kann. Die Menge des Löschmittels kann dabei auf eine erste Bekämpfung des Brandherdes ausgelegt sein oder kann ausreichen, einen Brand in dem Filtermodul 334 sicher zu löschen. Dabei kann wiederum wie in der Ausführungsform der Figur 5 eine Löschmittelverteileinrichtung 372 vorgesehen sein, welche eine Verteilung des in das Innere des Filtermoduls 334 auf die einzelnen Filtereinheiten 350 oder/und auf geeignete Stellen innerhalb des Filtermoduls 334 vornimmt. Um im Brandfall einen Betrieb der Filtervorrichtung 330 zu unterbrechen, um den Brand bekämpfen zu können, können eine Steckverbindung mit einem Stecker 362 an dem Filtermodul 334 und einer Buchse 366 im Andockbereich 332 der Filtervorrichtung angebracht sein. Über diese Verbindung kann die Information, dass in dem Filtermodul 334 ein Brand aufgetreten ist, an die Filtervorrichtung 330 oder an die Beschichtungsanlage weitergeleitet werden und gegebenenfalls eine Unterbrechung des Beschichtungsbetriebs oder der Filtervorrichtung 330 eingeleitet werden.

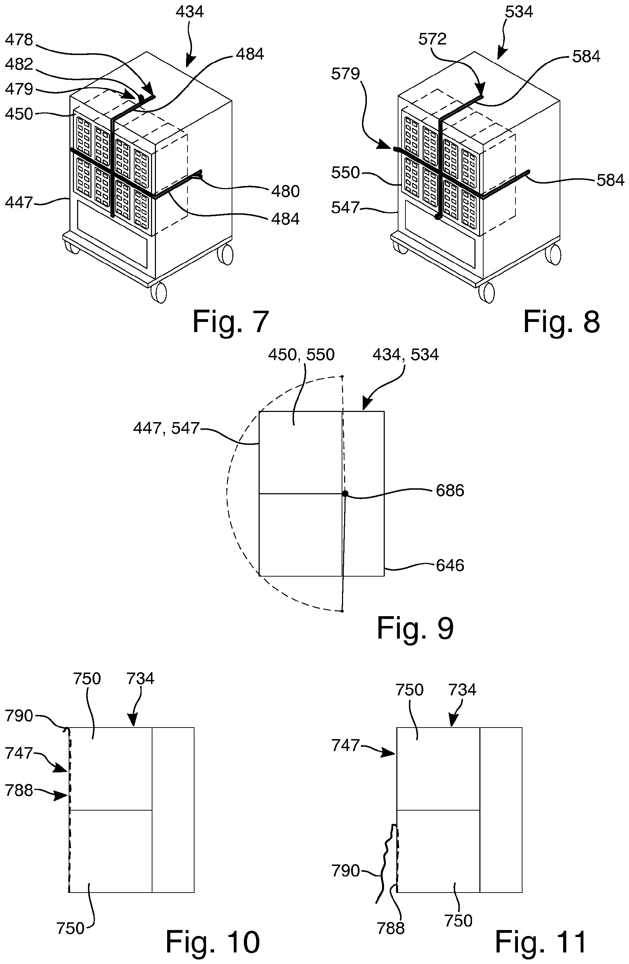

Die Figuren 7-11 zeigen verschiedene Ausführungsformen eines Filtermoduls für eine Filtervorrichtung, die eine vereinfachte Entnahme von Filtereinheiten ermöglichen.

Figur 7 veranschaulicht in einer schematischen Perspektivansicht ein Filtermodul 434, das generell ähnlich den Filtermodulen der vorhergehenden Ausführungsbeispiele aufgebaut ist. Auf der Rückseite 447 des Filtermoduls 434, welche dem Andockbereich einer Filtervorrichtung zugewandt ist und auf der eine Entnahme von (teil-)beladenen Filtereinheiten 450 (in der Regel durch eine Bedienperson) erfolgt, ist eine Trennvorrichtung 478 angebracht. Die Trennvorrichtung 478 ist in der Ausführungsform der Figur 7 als Hebelsystem 479 ausgeführt, das manuell durch eine Bedienperson betätigt wird. Das Hebelsystem 479 umfasst zwei Hebel 480, 482, wovon ein erster Hebel durch eine Bedienperson in einer waagrechten Schwenkbewegung verschwenkt werden kann und bei dieser Schwenkbewegung beispielsweise ein Schneide zwischen den Filtereinheiten 450 hindurch führt. Dabei werden möglicherweise bei der Abscheidung entstandene Verklebungen oder Anhaftungen gelöst oder/und durchtrennt, die ansonsten eine Entnahme der Filtereinheiten 450 erschweren können. Im beladenen Zustand weisen die Filtereinheiten ein beträchtliches Gewicht auf, das eine Handhabung der Filtereinheiten 450 durch Bedienpersonen im Falle von Verklebungen oder/und Anhaftungen sehr mühsam machen kann.

In vergleichbarer Weise zu dem ersten Hebel 480 ist ein zweiter Hebel 482 angebracht, der in einer vertikalen Schwenkbewegung ebenfalls eine Durchtrennung oder ein Lösen von Anhaftungen zwischen Filtereinheiten 450 bewirkt und so eine Entnahme der Filtereinheiten 450 nach deren Beladung erleichtert.

Das Hebelsystem 479 mit den Hebeln 480, 482 kann im abströmseitigen Bereich der Filtereinheiten 450 verschwenkbar gelagert sein, da dort bereits eine Filterung der Kabinenluft stattgefunden hat und eine das Hebelsystem 479 möglicherweise störende Abscheidung von Overspray nur in geringem Umfang stattfinden kann. Zur Unterstützung der Bewegung der Hebel 480, 482 sind seitlich in dem Gehäuse 446 des Filtermoduls 434 Führungen 484 angebracht, die während des Filtervorgangs des Filtermoduls 434 abgedichtet sind.

Figur 8 zeigt eine alternative Ausführungsform zu dem Filtermodul der Figur 7. Das Filtermodul 534 der Figur 8 weist anstatt der Hebelmechanik als Trennvorrichtung 578 ein Schnur-/Seilsystem 579 als Schneide auf. In gleicher Weise wie bei der Ausführungsform der Figur 7 werden bei einer horizontalen oder/und vertikalen Bewegung des Schnur-/Seilsystems 579 entlang vorgesehener Führungen 584 Teile einer Schnur bzw. eines Seils zwischen Filtereinheiten 550 hindurchgeführt, wodurch diese voneinander getrennt werden, sollte während des Filtervorgangs Overspray-Partikel zwischen die Filtereinheiten 550 gelangen und diese dadurch verkleben.

Figur 9 veranschaulicht in einer schematischen Querschnittsansicht eine mögliche Lagerung der Trennvorrichtungen 478, 578 der Figuren 7, 8. Es ist bei der Ausführungsform der Figuren 7, 8, wie in der Figur 9 dargestellt, auf der Abströmseite der Filtereinheiten 450, 550 ein Drehpunkt 686 angeordnet. Um diesen Drehpunkt kann beispielsweise das Hebelsystem 479 oder das Schnur-/Seilsystem 579 geschwenkt werden. Wie in Figur 9 gezeigt befindet sich der Drehpunkt 686 in der Mitte zwischen zwei Filtereinheiten.

Alternativ kann der Drehpunkt 686 auch an den äußeren Rand eines Gehäuses 646 des Filtermoduls gelegt werden. In dem Fall eines Schnur-/Systems 579 kann beim Einbau der Filtereinheiten die Schnur bzw. das Seil hinter die Filtereinheiten so in die richtige Position für die spätere Trennung gelegt werden, dass das freie Ende gegenüber dem Drehpunkt/Fixpunkt von einer Bedienperson gegriffen werden kann. Dies besitzt den Vorteil, dass keine seitlichen Führungen in dem Gehäuse vorgesehen werden müssen, die abzudichten wären.

Die Figuren 10 und 11 veranschaulichen eine weitere Ausführungsform eines Filtermoduls 734 in einer schematischen horizontalen Querschnittsansicht. Das Filtermodul 734 ist nach dem Einbau von Filtereinheiten 750 mit einer Maskierung/Abklebung 788 auf der Rückseite 747, welche dem Andockbereich einer Filtervorrichtung zur Kopplung zugewandt ist, versehen. Die Maskierung 788 ist an den Stellen angebracht, an denen Filtereinheiten 750 aneinandergrenzen und an denen ein Eindringen von Overspraypartikeln unerwünscht ist. Da das Entfernen der Abklebung/Maskierung 788 nach dem abgeschlossenen Filtervorgang aufgrund der Oversprayschichten, welche sich auf der Abklebung/Maskierung abscheiden, oftmals mühsam ist, weist die Abklebung/Maskierung 788 einen Trennfaden 790 auf. Der Trennfaden 790 ist in die Maskierung/Abklebung 788 so eingearbeitet, dass ein freies Ende auch nach dem Beschichtungsvorgang leicht gegriffen werden kann. Vor dem Entnehmen der Filtereinheiten 750 kann das freie Ende des Trennfadens 790 durch eine Bedienperson betätigt werden. Dies ist in Figur 11 dargestellt. Der Trennfaden 790 wurde bereits teilweise betätigt und hat die Abklebung/Maskierung 788 bereits teilweise durchtrennt. Dies ermöglicht eine deutlich schnellere Entnahme der Filtereinheiten 70 bei deren Austausch nach dem Filtervorgang. Selbstverständlich können eine Abklebung oder/und eine Maskierung auch mit einem manuell geführten Trennelement, das durch das Bedienpersonal geführt wird, getrennt oder abgelöst werden.

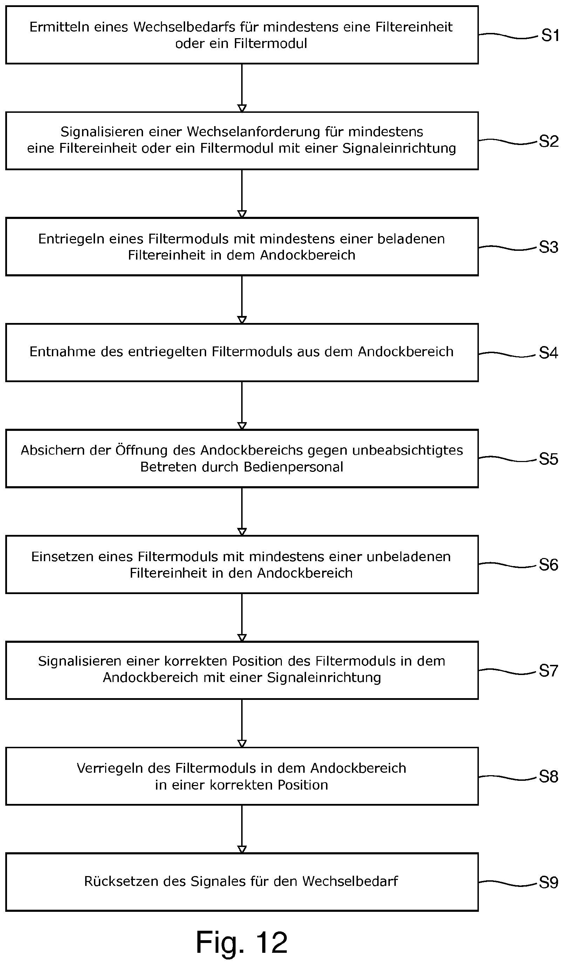

Figur 12 veranschaulicht in einem Ablaufdiagramm ein Verfahren zum Wechseln einer Filtereinheit. In einem ersten Schritt (S1) wird ein Wechselbedarf einer Filtereinheit oder eines eine solche Filtereinheit aufweisenden Filtermoduls, beispielsweise ein Filterwagen wie vorstehen beschrieben, ermittelt. Das Ermitteln eines Wechselbedarfs kann beispielsweise durch einen Druckabfall zwischen einem Zuluftanschluss und einem Abluftanschluss, durch Ermitteln von Massen- oder Volumenströmen, welche durch die Filtereinheit oder/und das Filtermodul geströmt sind oder durch Ermitteln eines Beschichtungsmaterialverbrauchs oder/und durch Ermitteln von statistischen Werten erfolgen.

Besteht ein solcher Wechselbedarf, wird eine Wechselanforderung für die Filtereinheit oder/und das Filtermodul mittels einer Signaleinrichtung signalisiert (S2). Diese Signalisierung kann beispielsweise direkt an dem Filtermodul erfolgen, so dass sie von einem Bedienpersonal wahrgenommen werden kann. Alternativ oder zusätzlich kann die Signalisierung auch zentral an die Filtervorrichtung, welcher das Filtermodul zugeordnet ist, oder einer zentralen Einrichtung einer Beschichtungsanlage kommuniziert werden.

In Folge einer solchen Wechselanforderung kann - entweder manuell durch Bedienpersonal betätigt oder durch eine Zentralfunktion ausgelöst - das betroffene Filtermodul mit der beladenen Filtereinheit in dem Andockbereich, an welchen es mit der Filtervorrichtung gekoppelt ist, entriegelt werden (S3).

Das Entkoppeln trennt das Filtermodul von dem Zuluftstrom durch die Beschichtungsanlage bzw. die Filtervorrichtung und erlaubt eine Entnahme des Filtermoduls aus dem Andockbereich (S4). In diesem Zustand der Filtervorrichtung bzw. der Beschichtungsanlage sind die Zuluftanschlüsse und Abluftanschlüsse der Filtervorrichtung offen zugänglich und aufgrund der Dimensionen, die eine solche Filtervorrichtung bzw. ein Filtermodul für eine Beschichtungsanlage aufweisen, besteht eine Gefahr eines unbefugten Betretens dieser Anschlüsse durch Bedienpersonal aufgrund Unkenntnis oder unaufmerksamen Verhaltens.

Es kann deshalb in einer Ausführungsform des erfindungsgemäßen Verfahrens zusätzlich vorgesehen sein, dass bei möglicherweise freiliegenden Öffnungen des Andockbereichs der Filtervorrichtung ein unbeabsichtigtes Betreten durch Bedienpersonal detektiert, erschwert oder/und verhindert wird (S5). Ein Absichern kann beispielsweise durch eine entsprechende Signalgebung im Umfeld des offenen Andockbereichs oder/und durch ein mechanisches Absperren des Andockbereichs erfolgen. Auch können beispielsweise bauliche Maßnahmen wie eine höhere Stufe, ein Absperrband oder ähnliches bei einem Freiwerden eines solchen Anschlusses ein Betreten erschweren oder verhindern. Eine Detektion von Bedienpersonal kann beispielsweise durch optische Sensoren oder/und durch Trittelemente erfolgen. Die Signalgebung und das Absperren können automatisch durch die Filtervorrichtung oder die Beschichtungsanlage erfolgen und durch Sensoren, die ein unbefugtes Eindringen ermitteln können, unterstützt oder/und ausgelöst werden.

Nachdem das Filtermodul, das aus dem Andockbereich entfernt worden ist, mit einer unbeladenen Filtereinheit versehen worden ist, kann ein Filtermodul - das gleiche, welches neu mit unbeladenen Filtereinheiten bestückt worden ist, oder ein anderes, bereits vorbestücktes Filtermodul - in den Andockbereich gefahren und mit der Filtervorrichtung wirksam gekoppelt werden (S6).

Sobald eine korrekte, d.h. je nach Anforderung gas- oder/und partikeldichte, Position und damit auch Verbindung des Filtermoduls mit der Filtervorrichtung vorliegt, kann diese korrekte Position mit einer entsprechenden Signaleinrichtung kommuniziert werden (S7). Dies kann wiederum im Umfeld des Filtermoduls für eine Bedienperson wahrnehmbar oder/und eine zentralen Einrichtung der Filtervorrichtung oder/und der Beschichtungsanlage kommuniziert und dort entsprechend weiterverarbeitet werden.

In einem weiteren Schritt kann das Filtermodul in der korrekten Position verriegelt werden (S8). Damit ist eine Gefahr für das Bedienpersonal nicht mehr vorhanden und es können, falls nicht schon nach dem Einsetzen des Filtermoduls in dem Andockbereich (S6) geschehen, eventuelle Sicherheitsmaßnahmen zurückgenommen werden. Beispielsweise kann ein entsprechendes Signal für das Bedienpersonal ausgeschaltet werden.

In einem letzten Schritt kann das Signal für den Wechselbedarf zurückgesetzt werden (S9).

## Patentansprüche

1. Filtervorrichtung (30) zum Abscheiden von Overspray aus mit Overspray beladener Kabinenluft einer Beschichtungsanlage (10), mit
a) einem Filtermodul (34) mit zumindest einer austauschbaren Einweg-Filtereinheit (50), wobei durch das Filtermodul (34) mit Overspray beladene Kabinenluft leitbar ist und in welchem Overspray abscheidbar ist, wobei
b) das Filtermodul (34) mit einem Zuluftanschluss (36) und einem Abluftanschluss (38) koppelbar ist und eine Koppelstelle (32) mit der Filtervorrichtung aufweist.

2. Filtervorrichtung nach Anspruch 1, wobei die Koppelstelle (160-166) dazu ausgelegt ist, Energie oder/und ein Signal zu übertragen oder/und zu erzeugen, wobei das Signal insbesondere einen eingekoppelten oder/und einen ausgekoppelten Zustand des Filtermoduls oder/und einen Beladungszustand des Filtermoduls (34) widerspiegelt.

3. Filtervorrichtung nach einem der vorhergehenden Ansprüche, wobei die Filtervorrichtung (30) eine Signaleinrichtung (56) aufweist, welche dazu eingerichtet ist, ein optisches, akustisches oder/und ein elektrisches Signal auszugeben.

4. Filtervorrichtung nach Anspruch 3, wobei das Signal als Schaltzustand einer Leuchtanzeige, als Intensität einer Leuchtanzeige, als Farbanzeige, als Textanzeige, als Symbolanzeige, als Stellung eines Betätigungsorgans oder/und als Veränderung eines der genannten Signale ausgebildet ist.

5. Filtervorrichtung nach einem der vorhergehenden Ansprüche, wobei das Filtermodul (34) von einer Bedienperson auf dem Boden verfahrbar ausgebildet ist.

6. Filtervorrichtung nach einem der vorhergehenden Ansprüche, wobei die austauschbare Einweg-Filtereinheit (750) ein Außengehäuse mit einer Anströmseite und einer Abströmseite aufweist und wobei die Filtervorrichtung ein Trennmittel (788) zur Verhinderung eines Verklebens der Einweg-Filtereinheit (750) mit einer zweiten Filtereinheit oder dem Filtermodul (734) aufweist, wobei das Trennmittel insbesondere eine Abdeckvorrichtung (788) zum strömungsdichten Verbinden des Außengehäuses der Einweg-Filtereinheit (750) mit dem Filtermodul (734) oder/und mit einer weiteren benachbart angeordneten Einweg-Filtereinheit aufweist, wobei die Abdeckvorrichtung insbesondere ein Band (788), eine Folie oder/und eine pastöse Creme ist.

7. Filtervorrichtung nach einem der vorhergehenden Ansprüche, mit einer Sicherheitseinrichtung, die von der Filtervorrichtung im Filterbetrieb bei einem nicht gekoppelten Filtermodul in einen sicherheitswirksamen Zustand bringbar ist.

8. Filtervorrichtung nach einem der vorhergehenden Ansprüche, wobei das Filtermodul eine betätigbare Verriegelungsvorrichtung aufweist, die eine selbsttätige Entkopplung des Filtermoduls von der Filtervorrichtung verhindert, solange an dem Zuluftanschluss oder/und dem Abluftanschluss ein Gasdruck herrscht, der über dem Umgebungsdruck liegt, oder/und wobei die Filtervorrichtung eine betätigbare Überströmvorrichtung aufweist, die ein Überströmen von Umgebungsluft in die Filteranlage im Bereich der Koppelstelle für den Fall ermöglicht, dass der Gasdruck in dem Filtermodul niedriger als der Umgebungsdruck ist.

9. Filtervorrichtung nach einem der vorhergehenden Ansprüche, wobei das Filtermodul (434) eine Trennvorrichtung (478) für ein Separieren von Filtereinheiten (450) für die Entnahme der Filtereinheiten (450) aus dem Filtermodul (434) aufweist, wobei die Trennvorrichtung (788) insbesondere eine Trennschnur (790) oder eine Schneide aufweist.

10. Filtervorrichtung nach einem der vorhergehenden Ansprüche, wobei im Bereich des Zuluftanschlusses (36) oder/und des Abluftanschlusses (38) ein Gebläse angeordnet ist, wobei das Gebläse insbesondere an dem Filtermodul angeordnet ist.

11. Beschichtungsanlage (10) zum Lackieren von Fahrzeugbauteilen oder/und Fahrzeugkarosserien mit einer Filtervorrichtung nach einem der vorhergehenden Ansprüche.

12. Beschichtungsanlage nach Anspruch 11, wobei die Beschichtungsanlage für den Zuluftanschluss oder/und den Abluftanschluss eine Vorrichtung zur Verhinderung, Erschwerung oder/und Detektion eines Zutritts durch eine unbefugte Person aufweist, wobei die Vorrichtung insbesondere eine mechanische Verhinderung oder Erschwerung des Zutritts oder einen Detektor für die Erkennung eines Zutritts oder eines Zutrittsversuchs aufweist oder/und dazu eingerichtet ist, ein für eine Person wahrnehmbares optisches oder/und akustisches Signal auszugeben.

13. Verfahren zum Wechseln eines Filtermoduls einer Filtervorrichtung nach einem der vorhergehenden Ansprüche, mit den Schritten:
a) Signalisieren einer Wartungsanforderung für eine Filtereinheit oder/und ein Filtermodul (S2);
b) Entkoppeln des Filtermoduls von der Filtervorrichtung (S3);
c) Durchführen der Wartung; und
d) Koppeln eines Filtermoduls mit der Filtervorrichtung (S8),
e) wobei der Schritt des Durchführens einer Wartung insbesondere ein Austauschen zumindest einer beladenen Filtereinheit gegen eine unbeladene Filtereinheit (S6) umfasst.

14. Verfahren nach Anspruch 13, wobei vor dem Signalisieren einer Wartungsanforderung der Schritt durchgeführt wird: Ermitteln eines Wechselbedarfs für eine Filtereinheit oder/und ein Filtermodul (S1).

15. Verfahren nach einem der Ansprüche 13-14, wobei nach dem Schritt des Entkoppelns eine Absicherung des Zuluftanschlusses oder/und des Abluftanschlusses (S5) erfolgt, wobei die Absicherung insbesondere ein unbeabsichtigtes Betreten des Zuluftanschlusses oder/und des Abluftanschlusses verhindert, erschwert oder/und detektiert.
